**Europäisches Patentamt**

**European Patent Office**

**Office européen des brevets**

(19)

(11) Veröffentlichungsnummer: **0 235 378 B1**

# EUROPÄISCHE PATENTSCHRIFT

(12)

(45) Veröffentlichungstag der Patentschrift:
**16.01.91 Patentblatt 91/03**

(51) Int. Cl.$^5$: **B65B 27/12, A01F 15/14**

(21) Anmeldenummer: **86117278.1**

(22) Anmeldetag: **11.12.86**

(54) **Maschine zum Pressen und Umschnüren von Ballen.**

(30) Priorität: **27.02.86 DE 3606303**

(43) Veröffentlichungstag der Anmeldung:
**09.09.87 Patentblatt 87/37**

(45) Bekanntmachung des Hinweises auf die
Patenterteilung:
**16.01.91 Patentblatt 91/03**

(84) Benannte Vertragsstaaten:
**BE DE FR IT NL SE**

(56) Entgegenhaltungen:
**EP-A- 0 084 620**
**EP-A- 0 084 680**
**DE-A- 2 709 248**

(56) Entgegenhaltungen:
**DE-A- 2 713 412**
**DE-A- 3 139 175**
**DE-A- 3 406 515**
**FR-A- 2 267 938**

(73) Patentinhaber: **Paal's Packpressen-Fabrik
GmbH & Co. KG
Raiffeisenstrasse 15-17
D-4504 Georgsmarienhütte (DE)**

(72) Erfinder: **Westerfeld, Manfred
Mörikeweg 1
D-4500 Osnabrück (DE)**

(74) Vertreter: **Busse & Busse Patentanwälte
Postfach 1226 Grosshandelsring 6
D-4500 Osnabrück (DE)**

## Beschreibung

Die Erfindung betrifft eine Maschine nach dem Oberbegriff des Anspruchs 1, z.B. aus DE-A-3406 515 bekannt.

Bei Ballenpressen dieser Art ist der im endseitig geschlossenen Preßkasten oder im endseitig offenen Preßkanal fertiggestellte Ballen so zu umschnüren, daß das zusammengepreßte, häufig elastisch auseinanderstrebende Material formhaltig zusammenbleibt. Dementsprechend werden in der Regel mehrere parallele Drahtschleifen um einen solchen Ballen gelegt, und zwar, da sich durch das Pressen Querschichtungen bilden, so, daß die Drahtschleifen in Ebenen parallel zur Preßrichtung verlaufen. Die Ebenen können grundsätzlich horizontal oder vertikal gerichtet sein, mit Rücksicht auf eine platzsparende Anordnung der Umschnürungsrichtung wird bei Kanalballenpressen die Umschnürungseinrichtung gern oberhalb des Preßkanals angebracht, so daß die Drahtschleifen in vertikalen Ebenen verlaufen.

Bekannte Maschinen dieser Art weisen einen Preßkanal auf, in dem oberseitig und unterseitig eine jeweils gleiche Anzahl von Drähten von einer eigenen Rolle in Preßrichtung nach vorn verlaufen und dort paarweise – jeweis ein oberer Draht mit einem unteren Draht – zu einer offenen Schleife miteinander verdrillt sind. Bei fertiggestelltem Ballen werden die Drahtpaare auch rückseitig miteinander verdrillt, wozu der untere Draht mit Drahtzugnadeln nach oben geführt wird und dann zur Anlage gegen den oberen Draht kommt. Beide Drähte des Drahtpaares werden dann durch zwei Drillhaken in zwei benachbarten Drahtabschnitten gleichzeitig verdrillt und abschließend dazwischen geschnitten, so daß nicht nur die Umreifung für den fertiggestellten Ballen geschlossen ist, sondern auch bereits die vorderseitige Verdrillung von Ober- und Unterdraht für den nächsten Ballen vorliegt.

Das Drillen und Schneiden des Drahtes ist dabei ein hinsichtlich des Zusammenspiels der beteiligten Werkzeuge und der Beanspruchung des Drahtes kritischer Vorgang, der leicht zu Betriebsstörungen der Maschine führen kann. Der Draht muß nämlich von den Drillhaken und vom Schneidwerkzeug auch dann erfaßt werden können, wenn er nicht präzise liegt oder Verformungen erlitten hat. Weiterhin soll das Verdrillen des Drahtes zwar dazu führen, daß die Umschnürung fest anliegt und die Verdrillung sich bei der weiteren Handhabung des Ballens nicht öffnet, der Draht darf dabei aber nicht etwa infolge der scharfen Drillbiegungen und der gleichzeitigen Längung reißen. Dies alles setzt herkömmlich hinsichtlich der Drillhaken und der Schneideinrichtung einen erheblichen technischen Aufwand voraus.

Aufgabe der Erfindung ist es, eine Maschine zum Pressen und Umschnüren von Ballen mit einer einfachen und robusten Drilleinrichtung zu schaffen, die gleichwohl den Drillvorgang mit hoher Zuverlässigkeit ausführt und dabei insbesondere die gewünschte gleichmäßige und feste Verdrillung bewirkt wie auch ein Herausgleiten des Drahtpaares aus dem Drillhaken weitgehend ausschließt.

Gemäß der Erfindung wird diese Aufgabe, von einer Maschine nach dem Oberbegriff des Anspruchs 1 ausgehend, mit den kennzeichnenden Merkmalen des Anspruchs 1 gelöst.

Als wichtiger Kunstgriff für einen zuverlässigen Drillvorgang wie auch für die Sicherung der Drähte gegen ein Herausgleiten hat sich das Abwinkeln der Drahtenden zwischen Drillhaken und Schneidbacken erwiesen. Damit erhält das Drahtpaar eine Auslenkung in Querrichtung, die auf eine ganz robuste Weise die Drillbewegung auf das Drahtpaar überträgt und die erforderlichen Verformungen bewirkt. Es wird damit zunächst einmal dem Draht eine Kurbel als Mitnehmer für die Drillbewegung angeformt, die unabhängig von jeglicher Klemmwirkung im Drillhaken wirksam ist. Die Abwinklung gewährleistet aber auch, daß das Drahtendenpaar nach dem Abschneiden nicht aus dem Drillhaken der Länge nach herausgleitet, und zwar weitgehend unabhängig von der Lage der Querschnitte des Drahtpaares im Drillhaken-Schlitz : Der kurbelförmig abgewinkelte Verlauf der Drahtenden – ggf. auch ein mit mehreren Abwinklungen versehener Längsverlauf – stellt einen Fanghaken für das Drahtende dar.

Vorzugsweise wird die Abwinklung mit Hilfe eines Ablenkkörpers zwischen Drillhaken und beweglichem Schneidbacken hergestellt. Dies kann ein mitlaufender Ablenkkörper sein, beispielsweise ein Konus, welcher auch bei Verkürzungen des verdrillten Drahtendes eine Abwinklung sicherstellt. In einem solchen Fall läßt sich aus Drillhaken, Ablenkkörper und beweglichem Schneidbacken eine stabile rotierende Baueinheit bilden, wobei der feststehende Schneidbacken direkt am Träger befestigbar ist.

Grundsätzlich kann der Ablenkkörper aber auch feststehend sein und als stehendes Widerlager für den Draht zwischen Drillhaken und dem umlaufenden Schneidbacken eingreifen. Der Ablenkkörper kann dann mit dem feststehenden Schneidbacken vereinigt sein, so daß der Draht geschnitten und anschließend zurückgebogen wird, indem ihn der Ablenkkörper zurückstreift.

Weitere Merkmale und Vorteile der Erfindung ergeben sich aus den Ansprüchen und der nachfolgenden Beschreibung, in der ein Ausführungsbeispiel des Gegenstands der Erfindung anhand einer Zeichnung näher erläutert ist. In der Zeichnung zeigen in jeweils schematisierter Ansicht :

Fig. 1 Längsschnitt durch eine Kanalballenpresse,

Fig. 2 vergrößerte Detailansicht des Bereichs II in Fig. 1,

Fig. 3 Ansicht nach Linie III-III in Fig. 2,

Fig. 4 u. 5 Ansichten gemäß Fig. 3 bei fortschreitender Drehung der Drillhaken,
Fig. 6 Schnitt nach Linie VI-VI in Fig. 4 und
Fig. 7 Schnitt nach Linie VII-VII in Fig. 6.

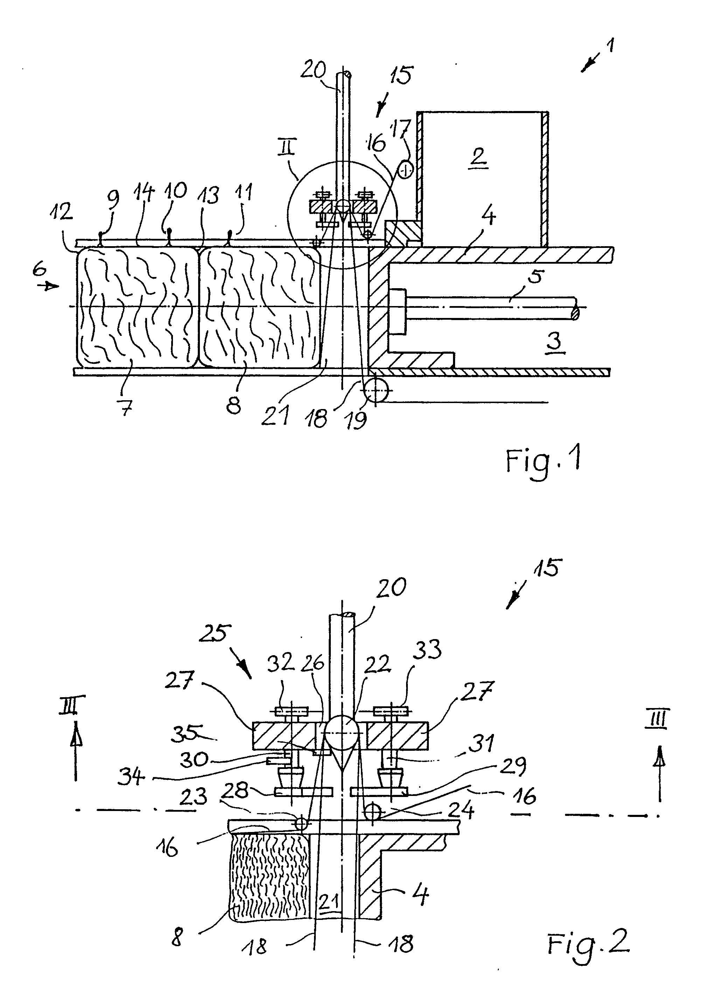

In bekannter Weise umfaßt eine Kanalballenpresse 1 einen Einfüllschacht 2 und einen Pressenraum 3 darunter, in dem ein Preßstempel 4 mittels eines hydraulischen Kolbens 5 vor- und rückbeweglich ist, um das eingeworfene Material in einen Preßkanal 6 vorzuschieben, der durch Verengung und Reibung gegenüber den Ballen 7, 8 dafür sorgt, daß der Preßstempel 4 bei seiner Vorschubbewegung in den Ballen ein Widerlager findet. Die in Fig. 1 gezeigte Position der Ballenpresse 1 erfaßt die mit einem abschließenden Preßstempelhub erfolgte Fertigstellung eines Balles mit vorgegebener Mindestlänge und den Beginn der Umschnürung mit nach oben zusammengeführten Drahtpaaren.

Der Preßkanal 6 weist oben und unten Längsschlitze auf. An der Oberseite des Preßkanals 6 treten durch solche Schlitze verdrillte Drahtenden 9, 10, 11 aus. Die beiden erstgenannten gehören zu einer Drahtschleife um den fertiggestellten Ballen 7, die der Kontur des Ballens folgt und die an zwei Stellen durch Verdrillung eines oberseitig längslaufenden Drahtes und eines unterseitig verlaufenden und um die senkrechten Stirnseiten des Ballens gezogenen Draht zusammengedrillt ist. Die Verdrillungen 9, 10 werden jeweils nahe oberen Querkanten 12,13 des Ballens hergestellt, verschieben sich danach infolge nachträglicher Ausdehnung und Ausrundung des Ballens auf dessen Oberseite.

An solchen, insgesamt mit 14 bezeichneten Drahtschleifen sind vier je Ballen vorgesehen, deren Ebene parallel zueinander und parallel zur Zeichenebene liegen, so daß der Ballen über seine ganze Breite mit Drahtschleifen geringen Abstands voneinander hinreichend zusammengehalten ist.

Bei dem fertig gepreßten aber noch nicht fertig gebundenen Ballen 8 verläuft (bei jeder der parallelen Drahtschleifen) ein oberer Draht 16 von der Verdrillung 11 durch eine Umschnürungseinrichtung 15 zu einer Drahtrolle 17, ein unterer Draht 18 von der Verdrillung 11 längs der vorderen Stirnseite des Ballens und unterseitig an diesem vorbei über eine Umlenkrolle 19 zu einer nicht dargestellten Drahtrolle nach hinten. Während der schubweisen Fertigstellung eines Ballens liegt der Draht in einem unteren Längsschlitz des Preßkanals 6 und wird erst bei Fertigstellung eines Ballens durch eine Zuführeinrichtung, hier eine vertikal gerichtete, von oben nach unten und zurück längsbewegliche Drahtzugnadel 20, heraufgeholt und zusammen mit dem oberen Draht 16 über den Preßkanal 6 hinaus in die Umschnürungseinrichtung 15 hineingezogen.

Zu der insoweit in der Praxis geläufigen Kanalballenpresse gehört auch, daß der Preßstempel 4 vorderseitig vertikale, nach vorne offene Spalte 21 aufweist, durch die hindurch die vier nebeneinanderliegenden Drahtzugnadeln 20 nach unten und wieder zurückfahren können. Die Umschnürungseinrichtung sorgt dann dafür, daß zwischen oberem und unterem Draht je eine Drillverbindung für den fertiggestellten Ballen und eine Drillverbindung für den anschließend fertigzustellenden Ballen entstehen, und zwar bei jeder der vier nebeneinanderliegenden Drahtschleifen.

Weitere Details der Umschnürungseinrichtung 15 sind aus Fig. 2 zu erkennen. An der rückseitigen oberen Querkante des Ballens 8 laufen die Drähte 16 und 18 zusammen und nach oben um eine Rolle 22 der in der oberen Endstellung beharrenden Drahtzugnadel 20, wobei der obere Draht 16 beidseitig durch zwei Niederhalterrollen 23 bzw. 24 geführt wird. Damit verläuft das Drahtpaar 16,18 schleifenförmig durch eine insgesamt mit 25 bezeichnete Drilleinrichtung, die einen quer über dem Preßkanal verlaufenden und innen zumindest im Bereich der Drahtzugnadeln bei 26 offenen Träger 27 aufweist. Am Träger 27 sind unterseitige Drillhaken 28, 29 über eine mittels einer nach oben hindurchlaufenden Welle 30, 31 gelagert und oberseitig über Kettenräder 32, 33 und eine umlaufende Kette angetrieben.

Jeder der umlaufenden Drillhaken erfaßt das zugeordnete Drahtpaar 16,18 auf einer Seite der Rolle 22, um es in einem spiralförmig an die Welle 30 heranlaufenden Schlitz einzuziehen und mit weiteren Drehungen aufzudrillen.

Das Drahtpaar ist auch zwischen den Drillhaken aufzutrennen. Hier ist die Schneidvorrichtung mit einem der beiden Drillhaken kombiniert, nämlich mit dem zum fertigen Ballen gelegenen Drillhaken 28, wenngleich die Schneidfunktion auch dem Drillhaken 29 zum Preßkolben hin zufallen kann, etwa um kürzere Drahtenden auf der weniger belasteten Seite für den neuen Ballen vorzusehen. Für das Abschneiden sorgen hier ein auf dem Drillhaken 28 an dessen zum Träger 27 zugewandten Oberseite gelagerter Schneidbacken 34 und ein mit diesem zusammenwirkender feststehend an der Unterseite des Trägers 27 angeordneter Schneidbacken 35.

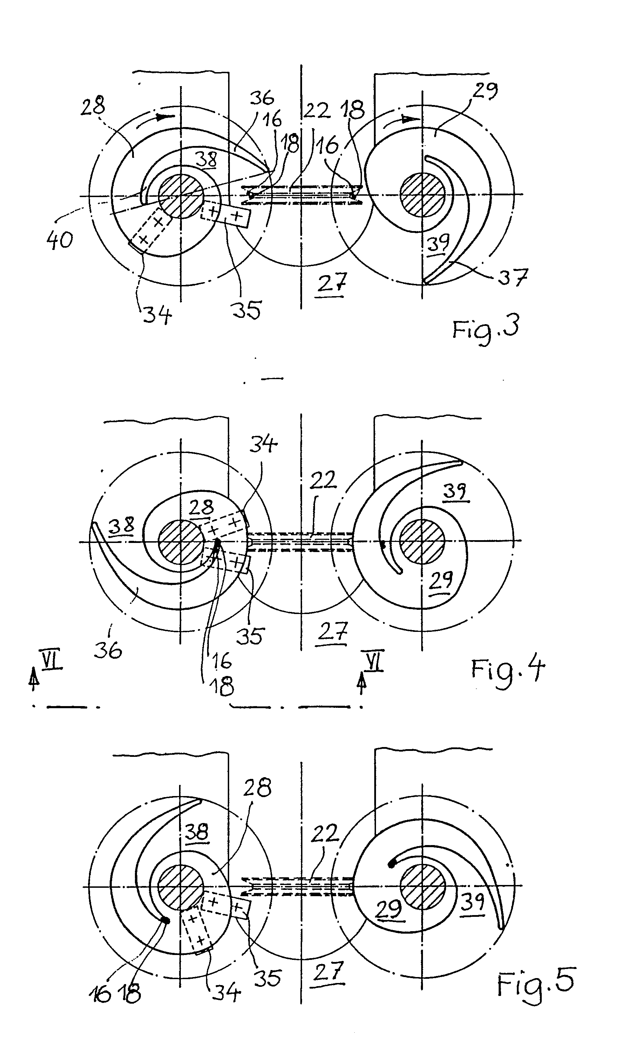

Aus den schematischen Ansichten nach Fig. 3, 4 und 5 sind drei wichtige Stellungen der Drillhaken 28, 29 während des ersten Umlaufs zu erkennen. In Fig. 3 ist die Ausgangsstellung der Drillhaken von unten zu sehen, in Fig. 4 befindet sich der Drillhaken 28 in einer Ausgangsstellung vor Durchführung eines Schnitts durch das Drahtpaar 16,18 und in Fig. 5 ist dieser Schnitt vollendet.

Die zunächst durch die Rolle 22 festgelegten Drähte 16,18 verlaufen etwa senkrecht zur Zeichnungsebene so durch den Drehkreis der Drillhaken 28 und 29 von ausladenden Fangarmen 26, 27 an diesen. Die Fangarme bilden die Außenkante eines Fangschlitzes 38 bzw. 39, welcher in einen achsnahen Endteil 40 einmündet. Insoweit sind die beiden Drillhaken übereinstimmend ausgebildet. Zusätzlich trägt die Welle 30 den beweglichen Scherbacken 34. Als Gegenstück ist an der Unterseite des Trägers 27 der feststehende Scherbacken 35 in einem Winkelabstand von etwas mehr als 240° in Umlaufrichtung zu erkennen (die Umlaufrichtung der Drillhaken in Fig. 3 bis 5 ist im Uhrzeigersinn).

In der Ansicht nach Fig. 4 hat der Drillhaken 28 (wie auch der Drillhaken 29) etwas mehr als eine Halbdrehung ausgeführt, wobei der Fangarm 36 das Drahtpaar 16,18 in den Endteil 40 des Fangschlitzes 38 eingezogen hat. Die Schneidbacken 34, 35 stehen kurz vor dem Zusammentreffen.

Die Fig. 5 zeigt dann die Situation, in der der bewegliche Schneidbacken 34 den feststehenden Schneidbacken 35 passiert und die Drähte geschnitten hat, wobei das Drahtpaar 16,18 im Endteil 40 des Fangschlitzes 38 gehalten ist. Aus den Fig. 4 und 5 ist insbesondere auch ersichtlich, daß die Schneidbacken 34, 35 nicht parallelkantig aneinander vorbeilaufen, sondern in der Schneidstellung einen Winkel miteinander bilden, was das Schneiden erleichtert und die Belastung des Drillhakens und dessen Antrieb beim Schneiden verringert.

Eine besondere Schwierigkeit dieser überaus einfachen und robusten Werkzeugkombination für das Drillen und Schneiden der Drähte ergibt sich allerdings ohne weiteres daraus, daß die Drähte bereits zu Beginn des Drillens geschnitten werden und dann ggf. infolge der Zugbelastung dazu neigen, in Längsrichtung des Drahtes wie auch in Längsrichtung des Drillhakenschlitzes herauszurutschen.

Es ist bereits versucht worden, dieses Problem durch Dimensionierung und Formgebung des Schlitzes im Drillhaken auszuräumen, was auch bei strengeren Anforderungen an die Stärke und die Materialeigenschaften des Bindedrahtes gelingen kann. Wird dabei die Breite des Fangschlitzes im Drillhaken so vorgegeben, daß der einzelne Drahtquerschnitt mit ausreichendem Bewegungsspiel aufgenommen werden kann, daß sich aber zwei Drähte nicht in dem Spalt umeinander drehen können (damit auch die Drillbewegung auf das Drahtpaar übertragen werden kann), dann werden Schwierigkeiten ersichtlich, die sich in der Praxis schon vom Toleranzbereich der Drahtstärken ergeben. Ähnliches gilt für den erforderlichen Reibschluß zwischen Draht und Drillhaken zur Sicherung gegen ein Herausrutschen.

Die hier dargestellte Presse löst das Problem durch eine kontrollierte Abwinklung der Drahtenden, die dann sowohl eine endseitige Wickelkurbel wie auch einen Fanghaken gegen das Herausrutschen bilden.

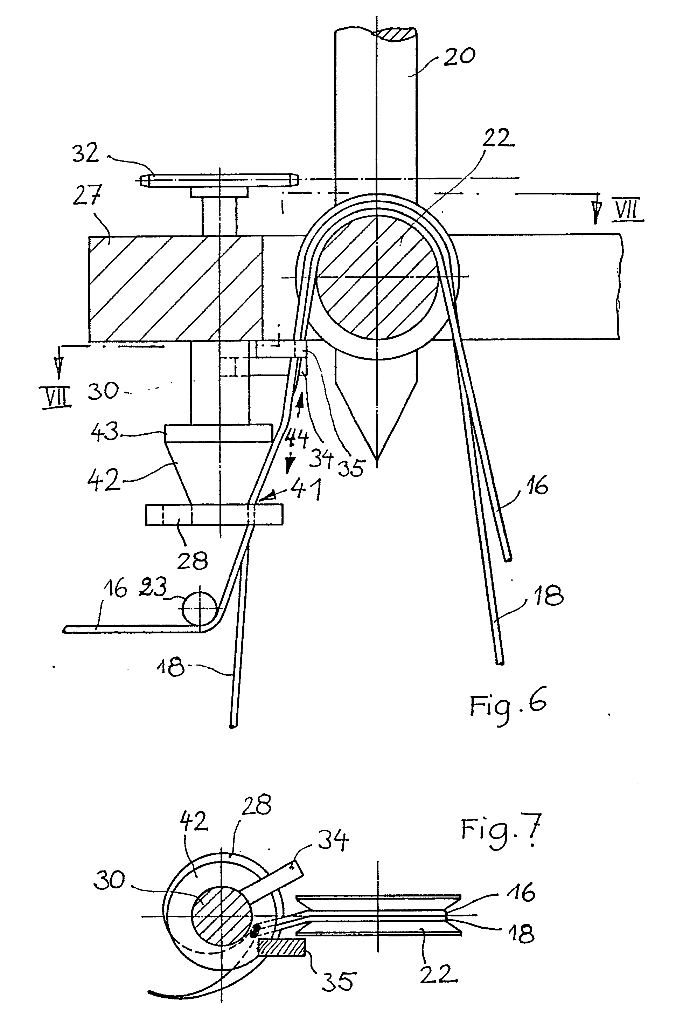

Wie aus der vergrößerten Darstellung nach Fig. 6 ersichtlich ist der bewegliche Schneidbacken 34 nicht unmittelbar am Drillhaken 28 angeordnet, sondern mit einem Zwischenraum 44 von z.B. 100 mm im Abstand vom Drillhaken 28 längs der Drillhakenwelle 30 versetzt, um mit dem so geschaffenen Zwischenraum einen Drahtbereich für die Anformung der Endabwinklungen vorzusehen.

Die Abwinklung erfolgt unmittelbar oberhalb des Austrittes des Drahtpaares aus dem Drillhaken 28 bei 41, wobei die Formgebung über einen konusförmigen Ablenkkörper 42 vorgegeben wird, der konzentrisch zur Achse der Welle 30 verläuft und dessen verjüngtes Kegelstumpfende in den Drillhaken 28 übergeht. Zur Vermeidung scharfer Kanten besitzt der Ablenkkörper oberseitig noch einen zylindrischen Ansatz 43.

Der Ablenkkörper 42 ragt in den Verlauf des Drahtpaares 16,18 zwischen Drillhaken 28 und Rolle 22 hinein und bewirkt die Abknickung bei 41 und eine weitere, gegenläufige Abknickung am oberen Konusende.

Die zusätzliche Abwin-klung ist ebenso unschädlich wie die weitere Abwin-klung des Drahtes 18 beim unterseitigen Austritt aus dem Drillhaken 28, da das Drahtmaterial üblicherweise einfaches und damit unelastisches, leicht verformbares Material ist. Weitere Verformungen des Drahtes ergeben sich ohnehin beim Verdrillen, bei dem das Drahtpaar auch in Längsrichtung verkürzt wird.

Letzteres wird durch die Konusform des Ablenkkörpers 42 berücksichtigt, die nicht nur eine erste Abwinklung im Augenblick des Schneidens schafft, sondern auch für eine vorgegebene Abwinklung auch noch bei verdrillungsbedingt sich verkürzenden Drahtenden sorgt und damit die Übertragung der Drillbewegung auf das Drahtpaar wie auch die gefangene Lage im Drillhaken sicherstellt. Diese Fanglage ist allerdings nicht so starr, daß der aufgedrillte Draht überdehnt werden könnte, vielmehr kann er nach und nach den Drillhaken durchwandern und somit der drillbedingten Verkürzung folgen.

Diese Gestaltung der Drill- und Schneideeinrichtung macht deren Funktion unabhängig von engen Vorgaben zum Drahtmaterial. Wichtig ist allerdings, eine bleibende Verformung des Drahtes sicherzustellen, also eine nach Biegeradius und Biegewinkel hinreichende Verformung vorzugeben, die deutlich über ein rein elastisches Verbiegen hinausgeht. Diesem Erfordernis kann aber ohne weiteres durch die Form und Größe des Ablenkkörpers Rechnung getragen werden.

Es versteht sich, daß der Ablenkkörper nicht zwingend rotationssymmetrisch sein muß, sondern - zweckmäßig bei Vermeidung komplizierter kantiger und damit störungsanfälliger Formen - verschiedene Ausgestaltungen zu diesem Zweck aufweisen kann, zumal sich der funktionswesentliche Teil des Ablenkkörpers eingrenzen läßt. Als mitlaufendes Teil bietet der Ablenkkörper 42 dabei dem Draht eine stationäre Anlagefläche.

Auf der anderen Seite ist ein Ablenkkörper grundsätzlich auch in einer feststehenden Form ausführbar, der, etwa auch als Träger des feststehenden Schneidbacken, radial nach innen in den Zwischenraum zwischen Drillhaken und beweglichem Schneidbacken eingereift und damit wie ein Rückstreifer auf die geschnittenen Drahtenden einwirkt.

## Ansprüche

1. Maschine zum Pressen und Umschnüren von Ballen, insbesondere Altpapierballen, mit Draht, bestehend aus einem Preßkasten oder -kanal, einem in diesen hinein alternierend beweglichen Preßstempel und einer Umschnürungseinrichtung zum Anlegen einer oder mehrerer Drahtumreifungen um einen fertiggepreßt gehaltenen Ballen (7, 8), wobei die Umreifungen jeweils aus einem Paar von Rollen ablaufender Drahtzüge (16,18) gebildet sind, die vorderseitig miteinander verdrillt sind, zwischen sich die Ballen einfassen und auch rückseitig unter gleichzeitiger Herstellung einer weiteren, für den nachfolgenden Ballen vorderseitigen Verdrillung miteinander verdrillt sind, wozu die Umschnürungseinrichtung je Drahtumreifung eine den einen Draht mit dem anderen zusammenbringende Zuführeinrichtung, eine Drilleinrichtung mit zwei im Abstand voneinander auf einem gemeinsamen Träger gelagerten, umlaufend antreibbaren Drillhaken (28, 29) und eine auf einen Bereich des Drahtpaars zwischen den Drillhaken wirkende Schneideinrichtung (34, 35) aufweist, dadurch gekennzeichnet, daß die Umschnürungseinrichtung (15) zwischen einem mit einem der Drillhaken (28) umlaufend beweglichen, mit einem stehenden, am Träger (27) festgelegten Schneidbacken (35) zusammenwirkenden Schneidbacken (34) und dem Drillhaken (28) einen Zwischenraum (44) für eine Endenverformung an dem abgeschnittenen Drahtpaar (16,18) aufweist und daß das Drahtpaar (16,18) von dem Drillhaken (28) zum Schneidbacken (34) hin zumindest in einem das Schneiden des Drahtpaares (16,18) einschließenden Umlaufbereich des Drillhakens mit einer eine bleibende Verformung erzielenden Abwinklung geführt ist.

2. Maschine nach Anspruch 1, dadurch gekennzeichnet, daß der bewegliche Schneidbacken (34) unter Einhaltung eines axialen Abstands (Zwischenraum 44) zum mitlaufenden Drillhaken (28) angeordnet ist und daß in dem Zwischenraum ein das Drahtpaar (16,18) zumindest beim Schneidvorgang abbiegender Ablenkkörper (42) angeordnet ist.

3. Maschine nach Anspruch 2, dadurch gekennzeichnet, daß der Ablenkkörper (42) mit dem Drillhaken (28) umlaufend angeordnet ist.

4. Maschine nach Anspruch 3, dadurch gekennzeichnet, daß der Ablenkkörper (42) zumindest teilweise rotations-symmetrisch zur Drehachse des Drillhakens (28) ausgebildet ist.

5. Maschine nach Anspruch 4, dadurch gekennzeichnet, daß der Ablenkkörper (42) eine konisch zum Drillhaken (28) zulaufende Mantelfläche bildet.

6. Maschine nach Anspruch 1 oder 2, dadurch gekennzeichnet, daß der Ablenkkörper mit dem Träger (27) feststehend ausgebildet ist.

7. Maschine nach Anspruch 6, dadurch gekennzeichnet, daß der Ablenkkörper mit dem feststehenden Schneidbacken vereinigt ist.

## Claims

1. A machine for compressing and binding bales, particularly bales of waste paper, with wire, consisting of a compression chest or channel, a pressure ram which is alternatingly movable into this, and a binding device for laying one or more wire hoops round a bale (7, 8) which is kept finish-compressed, the hoops each being formed from a pair of lengths of wire running off reels, which wires are twisted together at the front, enclose the bale between them and are also twisted together at the back while at the same time producing a further twist at the front for the following bale, for which purpose the binding device comprises, for each wire hoop, a feed device bringing the one wire together with the other, a twisting device having two twisting hooks (28, 29) which are mounted spaced apart from one another on a common support and can be driven in rotation, and a cutting device (34, 35) acting on a region of the pair of wires between the twisting hooks, characterised in that the binding device (15) comprises, between a cutting die (34), which is movable in rotation with one of the twisting hooks (28) and cooperates with a stationary cutting die (35) fixed to the support (27), and the twisting hook (28), a gap (44) for deforming the ends on the severed pair of wires (16,18), and that the pair of wires (16,18) is guided from the twisting hook (28) towards the cutting die (34), at least in a rotational region of the twisting hook including the cutting of the pair of wires (16,18), with a bend achieving a permanent deformation.

2. A machine according to Claim 1, characterised in that the movable cutting die (34) is arranged so as to maintain axial spacing (gap 44) from the co-rotating twisting hook (28), and that a deflecting member (42) which bends the pair of wires (16,18) at least during the cutting operation is disposed in the gap.

3. A machine according to Claim 2, characterised in that the deflecting member (42) is adapted to rotate with the twisting hook (28).

4. A machine according to Claim 3, characterised in that the deflecting member (42) is made at least partially rotationally symmetrical with the axis of rotation of the twisting hook (28).

5. A machine according to Claim 4, characterised in that the deflecting member (42) forms a generated surface tapering towards the twisting hook (28).

6. A machine according to Claim 1 or 2, characterised in that the deflecting member is made stationary with the support (27).

7. A machine according to Claim 6, characterised in that the deflecting member is united with the stationary cutting die.

## Revendications

1. Machine pour presser et lier des balles, en particulier des balles de vieux papiers à l'aide de fil de fer, comprenant un canal ou un couloir de presse, un piston de compression à mouvement alternatif mobile dans ce couloir et un dispositif de liage pour placer un ou plusieurs liens en fil de fer autour d'une balle maintenue à l'état pressé (7, 8), chacun des liens étant formé d'une paire de brins de fil (16, 18) provenant de rouleaux de fil, qui sont réunis par torsadage à l'avant, qui enserrent la balle entre eux et qui sont également réunis par torsadage à l'arrière pendant la formation simultanée d'une autre torsade avant pour la balle suivante, le dispositif de liage comportant, pour chaque lien en fil de fer, un dispositif d'alimentation rassemblant le premier fil et l'autre, un dispositif torsadeur muni de deux crochets de torsion (28, 29) pouvant être entraînés en un mouvement de révolution et montés à une certaine distance l'un de l'autre sur un support commun, et un dispositif de sectionnement (34, 35) agissant sur une zone de la paire de fils située entre les crochets de torsion, caractérisée en ce que le dispositif de liage (15) présente, entre une mâchoire de sectionnement (34) mobile en rotation avec un (28) des crochets de torsion et coopérant avec une mâchoire de sectionnement immobile (35) fixée sur le support (27), et le crochet de torsion (28), un espace intermédiaire (44) pour une déformation des extrémités de la paire de fils sectionnée (16,18) et que la paire de fils (16,18) est amenée à partir du crochet de torsion (28) jusqu'à la mâchoire de sectionnement (34), au moins dans une zone de la rotation du crochet de torsion comprenant le sectionnement de la paire de fils (16,18) avec un coudage assurant l'obtention d'une déformation permanente.

2. Machine suivant la revendication 1, caractérisée en ce que la mâchoire de sectionnement mobile (34) est disposée par rapport au crochet de torsion (28) tournant avec elle à une distance axiale (espace intermédiaire 44) de celui-ci et que, dans cet espace intermédiaire, est disposé un corps de déviation (42) pliant la paire de fils (16,18) au moins lors du processus de sectionnement.

3. Machine suivant la revendication 2, caractérisée en ce que le corps de déviation (42) est monté à rotation avec le crochet de torsion (28).

4. Machine suivant la revendication 3, caractérisée en ce que le corps de déviation (42) est d'une configuration au moins partiellement symétrique en rotation par rapport à l'axe de rotation du crochet de torsion (28).

5. Machine suivant la revendication 4, caractérisée en ce que le corps de déviation (42) forme une surface latérale allant en se rétrécissant en cône vers le crochet de torsion (28).

6. Machine suivant la revendication 1 ou 2, caractérisée en ce que le corps de déviation est immobile avec le support (27).

7. Machine suivant la revendication 6, caractérisée en ce que le corps de déviation est solidaire de la mâchoire de sectionnement fixe.

Fig.1

Fig.2

Fig.3

Fig.4

Fig.5

Fig.6

Fig.7